# EUROPÄISCHE PATENTANMELDUNG

(11) **EP 2 559 567 A2**
(43) Veröffentlichungstag der Anmeldung: **20.02.2013**
(21) Anmeldenummer: 12005882.1
(22) Anmeldetag: 15.08.2012
(51) Int. Cl.: B60B 27/00, B60B 27/02

(54) **Fahrradkomponente und Verfahren zur Montage einer Fahrradkomponente**

(30) Priorität: 17.08.2011 DE 102011110496
(71) Anmelder: DT Swiss AG, 2500 Biel (CH)
(72) Erfinder: Spahr, Stefan, 2543 Lengnau (CH); Walthert, Martin, 3270 Aarberg (CH)
(74) Vertreter: Schütte, Hartmut

(57) **Zusammenfassung**

Fahrradkomponente und Verfahren zur Montage einer Fahrradkomponente mit mehreren Einheiten, von denen eine Einheit als feststehende Einheit und wenigstens eine Einheit als rotierbare Einheit ausgebildet ist. Eine feststehende Einheit bildet die Nabenachse und eine rotierbare Einheit ist als Nabengehäuse ausgebildet. Das Nabengehäuse ist mit einer Speichenaufnahme zur Befestigung von Speichen versehen und ist über wenigstens ein Lager drehbar gegenüber der Nabenachse gelagert. Es ist wenigstens ein separater und an einer der mehreren Einheiten befestigter Dichtungsdeckel vorgesehen, an dem eine abgedichtete Durchgangsöffnung für eine Einheit vorgesehen ist, welche Einheit relativ zu dem Nabengehäuse drehbar ist.

## Beschreibung

Die vorliegende Erfindung betrifft eine Fahrradkomponente und ein Verfahren zur Montage einer Fahrradkomponente, wobei die Fahrradkomponente für wenigstens teilweise muskelbetriebene Fahrzeuge und insbesondere Zweiräder vorgesehen ist. Eine solche Fahrradkomponente ist insbesondere als Nabe ausgebildet und kann sowohl als Vorderradnabe als auch als Hinterradnabe ausgeführt werden.

Im Stand der Technik sind verschiedenste Naben für Fahrräder und sonstige Zwei- und Mehrräder bekannt geworden. Naben weisen meist ein Nabengehäuse auf, welches über zwei oder mehr Lager drehbar gegenüber der feststehenden Nabenachse gelagert ist. Um ein Auswaschen des Schmiermittels an den Lagern zu verhindern und um den Eintrag von Staub und sonstigen Schmutz zu den Lagern zu vermeiden, sind in der Regel Dichtungen vorgesehen, die die Lager vor Umwelteinschlüssen schützen.

Im sportlichen und auch im Wettkampfbereich für den Einsatz bei Straßenrennen und auch bei Mountainbike-Wettbewerben werden hohe Anforderungen an die einzelnen Fahrradkomponenten und insbesondere die Vorderrad- und Hinterradnaben gestellt. Eine zuverlässige Funktion und eine einfache Wartbarkeit sind wichtige Merkmale solcher Naben.

Auch das Gewicht der Komponenten ist ein wichtiger Parameter.

Hinterradnaben weisen meist einen Rotor auf, an dem ein Ritzelpaket oder eine Mehrzahl einzelner Ritzel angeordnet werden können, um den Benutzer eine Vielzahl von Übersetzungsvariationen zur Verfügung zu stellen.

In einer Hinterradnabe ist deshalb regelmäßig ein Freilauf vorgesehen, der für eine zuverlässige Übertragung der Antriebskraft von dem Rotor auf das Nabengehäuse sorgt, während der Freilauf den Rotor von dem Nabengehäuse entkoppelt, wenn der Benutzer beispielsweise bei Bergabfahrten gerade nicht tritt oder beispielsweise rückwärts tritt. Die zuverlässige Funktion des Freilaufs ist von großer Bedeutung für die Sicherheit beim Fahren. Deshalb wird der Freilauf meist über eine separate Dichtung vor Umwelteinflüssen geschützt.

Mit der DE 10 2007 030 190 A1 ist eine Nabe bekannt geworden, die über einen Zahnscheibenfreilauf verfügt. Bei einem solchen Zahnscheibenfreilauf werden zwei mit jeweils einer Axialverzahnung versehene Zahnscheiben aufeinander vorbelastet, um im Eingriffszustand das Antriebsdrehmoment von der einen Zahnscheibe auf die andere Zahnscheibe zu übertragen. Wenn gerade kein Antriebsdrehmoment aufgebracht wird oder der Benutzer beispielsweise rückwärts tritt, gleiten die Axialverzahnungen aneinander entlang und drücken sich gegen die Kraft der Vorspannung auseinander, sodass eine Freilauffunktion realisiert wird.

Bei einer solchen Nabe ist der Platz im Inneren begrenzt. Eine Zahnscheibe des Zahnscheibenfreilaufs ist meist innerhalb des Rotors angeordnet, während die andere Zahnscheibe das anliegende Drehmoment auf das Nabengehäuse überträgt. Da das Nabengehäuse in der Regel aus einem leichteren und weniger festen Material besteht, wird die Zahnscheibe in dem Nabengehäuse deshalb bei dieser bekannten Nabe innerhalb eines Gewinderinges aufgenommen, der in das Nabengehäuse eingeschraubt ist. Der Gewindering kann bei Verschleiß ausgetauscht werden, sodass die Standzeit der Nabe vergrößert wird.

Wichtig für die Funktion der Nabe ist die Dichtung zwischen dem Nabengehäuse und dem Rotor, um den Freilauf vor Wasser und Staub zu schützen.

Diese Nabe funktioniert zuverlässig, erfordert aber einen gewissen Aufwand bei der Konstruktion und der Montage, da die einzelnen Komponenten in den beengten Platzverhältnissen zuverlässig und ohne großen Aufwand montiert werden müssen.

Es ist deshalb die Aufgabe der vorliegenden Erfindung eine Fahrradkomponente und ein Verfahren zur Montage einer Fahrradkomponente zur Verfügung zu stellen, welche einen zuverlässigen Betrieb erlaubt und weniger aufwändig bei der Konstruktion und der Montage ist.

Diese Aufgabe wird gelöst durch eine erfindungsgemäße Fahrradkomponente mit den Merkmalen des Anspruchs 1. Das erfindungsgemäße Verfahren ist Gegenstand des Anspruchs 14. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Fahrradkomponente ist für den Einsatz an wenigstens teilweise muskelbetriebenen Fahrzeugen und insbesondere Zweirädern vorgesehen. Die Fahrradkomponente umfasst mehrere Einheiten, von denen wenigstens eine Einheit als feststehende Einheit und wenigstens eine Einheit als rotierbare Einheit ausgebildet ist. Eine feststehende Einheit bildet wenigstens einen Teil einer Nabenachse. Eine rotierbare Einheit ist als ein Nabengehäuse ausgebildet. Das Nabengehäuse ist mit wenigstens einer Speichenaufnahme zur Befestigung von wenigstens einer Speiche versehen. Das Nabengehäuse ist über wenigstens ein Lager drehbar gegenüber der Nabenachse gelagert. Wenigstens ein separater und an wenigstens einer der mehreren Einheiten befestigter Dichtungsdeckel ist vorgesehen, an dem eine wenigstens teilweise abgedichtete Durchgangsöffnung für wenigstens eine Einheit vorgesehen ist, welche Einheit relativ zu dem Nabengehäuse drehbar ist.

Die erfindungsgemäße Fahrradkomponente hat viele Vorteile. Die insbesondere als Nabe ausgeführte Fahrradkomponente ist einfach aufgebaut und leicht zu montieren. Dadurch, dass ein separater Dichtungsdeckel zur Abdichtung des Nabengehäuses nach außen vorgesehen ist, wird die Montage und der Aufbau vereinfacht.

Dabei kann der Dichtungsdeckel beispielsweise als Abdeckring oder Dichtring ausgeführt sein.

Der Dichtungsdeckel weist wenigstens und insbesondere genau eine Durchgangsöffnung auf, durch die im bestimmungsgemäßen Zusammenbau wenigstens eine Einheit der Fahrradkomponente durchgeführt ist. Die Durchgangsöffnung an dem Dichtungsdeckel ist wenigstens teilweise abgedichtet, um insbesondere das Innere der Fahrradkomponente vor Umwelteinflüssen zu schützen. Vorzugsweise ist wenigstens eine Einheit, die durch die Durchgangsöffnung an dem Dichtungsdeckel durchgeführt ist, die Nabenachse. Es ist auch möglich, dass andere feststehenden und/oder rotierbaren Einheiten durch die Durchgangsöffnung durchgeführt sind.

Insbesondere ist der Dichtungsdeckel mitdrehend an dem Nabengehäuse angeordnet. Der Dichtungsdeckel ist insbesondere fest mit dem Nabengehäuse verbunden. Der Dichtungsdeckel ist vorzugsweise lösbar vorgesehen.

In allen Ausgestaltungen ist es bevorzugt, dass der Dichtungsdeckel oder wenigstens ein Dichtungsdeckel wenigstens eine Dichteinheit aufweist. Dabei kann die Dichteinheit als vollständige Dichtung ausgeführt sein oder zusammen mit einer weiteren Dichteinheit eine Dichtung ergeben.

Insbesondere weist wenigstens ein Dichtungsdeckel des wenigstens einen Dichtungsdeckels eine Labyrinthdichtung als Dichteinheit und/oder wenigstens eine Elastomerdichtung als Dichteinheit auf. Möglich ist es auch, dass der Dichtungsdeckel eine berührungsfreie Labyrinthdichtung und eine berührende Dichtung aus einem elastischen Material umfasst.

Besonders bevorzugt ist wenigstens ein Dichtungsdeckel des wenigstens einen Dichtungsdeckels mit dem Nabengehäuse verschraubt. Dabei ist der Dichtungsdeckel vorzugsweise mit einem Außengewinde versehen und wird in ein Innengewinde des Nabengehäuses eingeschraubt. Möglich ist es aber auch, dass der Dichtungsdeckel ein Innengewinde aufweist, welches auf ein Außengewinde an dem Nabengehäuse aufgeschraubt wird. Ein Verschrauben des Dichtungsdeckels mit dem Nabengehäuse führt zu einer verliersicheren Aufnahme des Dichtungsdeckels an dem Nabengehäuse. Außerdem können noch weitere Komponenten durch den Dichtungsdeckel an dem Nabengehäuse gesichert werden.

Möglich ist es aber auch, dass der Dichtungsdeckel beispielsweise über eine Umfangsnut oder dergleichen verfügt, in die ein O-Ring eingelegt ist, sodass der Dichtungsdeckel klemmend in dem Nabengehäuse aufgenommen ist.

Vorzugsweise ist in dem Nabengehäuse wenigstens ein Führungsmittel vorgesehen, welches mit wenigstens einem Führungsmittel an dem Dichtungsdeckel zusammenwirkt, um eine definierte Aufnahme des Dichtungsdeckels an dem Nabengehäuse zu gewährleisten. Beispielsweise kann in dem Nabengehäuse ein Absatz vorgesehen sein, der zu einer definierten und hier insbesondere zentrierten Aufnahme des Dichtungsdeckels an dem Nabengehäuse führt, wenn der Dichtungsdeckel mit einem zylindrisch ausgeprägten Teil in das Nabengehäuse geschoben wird. Eine solche definierte Führung und Aufnahme des Dichtungsdeckels an dem Nabengehäuse ist insbesondere vorteilhaft, wenn der Dichtungsdeckel in das Nabengehäuse eingeschraubt wird und mit einer Dichtung versehen ist. Da ein Gewinde regelmäßig ein gewisses radiales Spiel aufweist, wird durch derartige Führungsmittel eine genau definierte Positionierung des Dichtungsdeckels an dem Nabengehäuse erzielt, was insbesondere für eine Dichtfunktion wichtig ist. Der oder wenigstens ein Dichtungsdeckel ist insbesondere an einer rotierbaren Einheit und insbesondere an dem Nabengehäuse befestigt. Möglich ist es auch, den oder wenigstens einen Dichtungsdeckel an einer feststehenden Einheit zu befestigen. Beispielsweise kann der Dichtungsdeckel an der Nabenachse oder einem Adapterring oder einer ähnlichen Einrichtung befestigt werden.

Besonders bevorzugt weist die Fahrradkomponente einen Rotor als rotierbare Einheit auf, an dem wenigstens ein Ritzel oder ein Ritzelpaket anzuordnen ist. Möglich ist es auch, den oder wenigstens einen Dichtungsdeckel an dem Rotor oder einer anderen rotierbaren Einheit zu befestigen. Bei einer solchen Gestaltung kann die Fahrradkomponente als Hinterradnabe eines Fahrrads ausgebildet sein. Dann ist es bevorzugt, dass ein Dichtungsdeckel vorgesehen ist, der eine Dichteinheit zur Dichtung des rotierbaren Nabengehäuses gegenüber dem rotierbaren Rotor und der Umgebung aufweist.

In einer solchen Ausgestaltung ist vorzugsweise ein Freilauf und insbesondere ein Zahnscheibenfreilauf vorgesehen, der wenigstens eine Zahnscheibe umfasst, die drehfest und axial verschiebbar in einer Eingriffkomponente aufgenommen ist. Es ist möglich, dass der Zahnscheibenfreilauf zwei axial bewegliche Zahnscheiben aufweist, die jeweils in einer Eingriffskomponente drehfest und axial verschiebbar aufgenommen sind. Vorzugsweise ist eine Eingriffskomponente in dem Nabengehäuse vorgesehen. Die andere Eingriffskomponente kann als separates Teil an dem Rotor vorgesehen sein oder aber durch den Rotor gebildet werden. Möglich ist es auch, dass eine axial bewegliche Zahnscheibe in einer Eingriffskomponente in dem Nabengehäuse aufgenommen ist, während die andere Axialverzahnung direkt als Stirnverzahnung an dem Rotor ausgebildet ist.

Wenigstens eine Zahnscheibe des Zahnscheibenfreilaufs weist eine unrunde Außenkontur auf und kann beispielsweise über eine Außenverzahnung verfügen, die in einer entsprechenden Innenverzahnung der Eingriffskomponente drehfest und axial verschiebbar angeordnet ist. Eine Eingriffskomponente ist vorzugsweise in das Nabengehäuse eingeschraubt. Bei einer solchen Ausgestaltung kann diese Eingriffskomponente als Gewindering mit einer unrunden Innenkontur vorgesehen sein, die mit einer unrunden Außenkontur der Zahnscheibe übereinstimmt, sodass eine drehfeste Aufnahme der Zahnscheibe in der Eingriffskomponente und eine axiale Verschiebbarkeit der Zahnscheibe gegenüber der Eingriffskomponente gewährleistet wird.

Möglich ist es aber auch, dass die Eingriffskomponente eine unrunde Außenkontur aufweist, die in eine entsprechend unrunde Innenkontur des Nabengehäuses eingeschoben ist, sodass die Eingriffskomponente drehfest in dem Nabengehäuse aufgenommen ist. Dabei ist eine axiale Demontage möglich.

Besonderes bevorzugt wird bei einer solchen Ausgestaltung die Eingriffskomponente in axialer Richtung durch den Dichtungsdeckel gesichert. Insofern kann der Dichtungsdeckel auch als Haltedeckel oder Nabendeckel bezeichnet werden. Beispielsweise kann der Dichtungsdeckel in das Nabengehäuse eingeschraubt werden und dabei die Eingriffskomponente in dem Nabengehäuse axial fixieren. Eine solche Ausgestaltung ermöglicht einen besonders einfachen Aufbau und eine einfache Montage einer solchen Fahrradkomponente.

Das Nabengehäuse kann einstückig ausgebildet sein oder aber auch aus mehreren separaten Teilen bestehen, die insgesamt eine rotierbare Einheit bilden. Vorzugsweise weist das Nabengehäuse wenigstens einen und insbesondere zwei Nabenflansche auf, wobei an wenigstens einem Nabenflansch nach außen verlaufende Speichenöffnungen für Speichen vorgesehen sind. Bei einer solchen Ausgestaltung ist die Fahrradkomponente insbesondere für Straight-Pull-Speichen vorgesehen. Dabei ist es bevorzugt, dass die Speichenöffnungen als Speichenlöcher ausgebildet und ringsum geschlossen ausgestaltet sind. Eine solche Konstruktion ist besonders stabil und ermöglicht einen leichteren Aufbau der Fahrradkomponente, da nur geringere Wandstärken benötigt werden. Möglich ist es aber auch, dass die Speichenöffnungen seitlich geschlitzt ausgebildet sind, sodass die Speichen von der Seite in Speichenöffnungen eingeschoben werden können. Zur Befestigung einer Vielzahl von Speichen muss kein umlaufender Speichenflansch vorgesehen sein. Möglich ist es auch, dass für jede Speiche eine separate Speichenaufnahme vorgesehen ist. Oder aber wenigstens eine beliebig gestaltete Speichenaufnahme dient zur Befestigung mehrerer Speichen.

Vorzugsweise ist an dem Nabenflansch bzw. der Speichenaufnahme wenigstens ein Aufnahmeraum für wenigstens ein inneres Speichenende vorgesehen, sodass der Speichenkopf in dem Aufnahmeraum angeordnet werden kann. Der Aufnahmeraum wird insbesondere durch den Dichtungsdeckel abgedeckt. Diese Variante ermöglicht es, die bei der Montage eines Rades benötigten Speichen in die Speichenöffnungen einzuführen, sodass der Speichenkopf bzw. das innere Speichenende jeweils an einem Aufnahmeraum vorgesehen ist. Durch das Abdecken des Aufnahmeraums durch den Dichtungsdeckel werden die Speichen verliersicher an der Nabe aufgenommen.

Werden beispielsweise Messerspeichen mit abgeflachten Speichenköpfen eingesetzt, so kann eine winkelmäßige Ausrichtung der Speichen bei der Montage und dem späteren Betrieb gewährleistet werden.

Zur Verringerung des Luftwiderstands von Speichenrädern sind Speichen bekannt geworden, deren Speichenkörper abgeflacht sind und die eine messerartige Struktur aufweisen. Solche Speichen weisen in Fahrrichtung einen erheblich reduzierten Strömungswiderstand auf. Bei solchen abgeflachten Speichenkörpern ist es aber wichtig, dass die Speichen mit ihrer abgeflachten Seite in Strömungsrichtung positioniert werden, da sonst der Strömungswiderstand nicht verringert, sondern möglicherweise sogar gegenüber konventionellen Speichen erhöht wird. Schon eine leichte Verdrehung des Speichenkörpers kann den Luftwiderstand merklich erhöhen.

Durch das Zusammenspiel des Aufnahmeraums an dem Nabengehäuse zur Aufnahme des inneren abgeflachten Speichenendes und insbesondere des abgeflachten Speichenkopfes mit dem außen aufgebrachten Dichtungsdeckel kann die Speiche verdrehsicher gehalten werden, sodass ein geringer Luftwiderstand gewährleistet wird.

In allen Ausgestaltungen und Weiterbildungen wird vorzugsweise wenigstens an einem Ende der Nabenachse ein Adapterring als insbesondere feststehende Einheit angeordnet. Vorzugsweise wird an jedem Ende der Nabenachse ein Adapterring vorgesehen. Die Adapterringe verlängern die Nabenachse und stellen Aufnahmeabschnitte für die Ausfallenden zur Verfügung. Es ist möglich, dass an wenigstens einem Adapterring wenigstens ein Dichtungsdeckel befestigt wird.

In allen Ausgestaltungen besteht der Nabenkörper wenigstens teilweise aus wenigstens einem leichten Material wie einem Leichtmetall oder Faserverbundwerkstoff. Die Zahnscheiben eines Zahnscheibenfreilaufs bestehen vorzugsweise aus Stahl.

Das erfindungsgemäße Verfahren dient zur Montage einer Fahrradkomponente. Dabei werden Speichen in Speichenöffnungen des Nabengehäuses eingeführt, sodass die radial inneren Speichenenden der Speichen in einem Aufnahmeraum an dem Nabengehäuse angeordnet sind. Anschließend wird ein Dichtungsdeckel an dem Nabengehäuse befestigt, sodass die Speichen verliersicher an der Nabe aufgenommen sind.

Auch das erfindungsgemäße Verfahren hat erhebliche Vorteile, da es die leichte und einfache Montage einer Fahrradkomponente erlaubt. Dabei können die Speichen durch seitliche Schlitze in den Speichenöffnungen eingeschoben werden oder aber die Speichen werden durch die rundum geschlossen ausgebildeten Speichenlöcher durch das Nabengehäuse hindurch nach außen durchgeführt, sodass die radial inneren Speichenenden bzw. Speichenköpfe in einem Aufnahmeraum des Nabengehäuses angeordnet sind. Dort können die insbesondere abgeflachten Speichenköpfe seitlich durch den Dichtungsdeckel fixiert werden, sodass die Speichen verdrehsicher an der Nabe aufgenommen werden.

Vorzugsweise sind die Abmessungen des Aufnahmeraums so bemessen, dass die Speichen nach dem Einschieben in das Nabengehäuse nur noch einen geringen Spielraum haben. Dadurch wird eine leichtere Montage des Rades im Anschluss erlaubt.

Bei der Montage einer Hinterradnabe wird vorzugsweise erst nach dem Einschieben der Speichen der Rotor aufgeschoben. Dadurch kann mehr Platz in der Nabe zur Verfügung gestellt werden, da beispielsweise die Dichtung des Rotors an dem Dichtungsdeckel vorgesehen ist, der erst nach dem Einstecken der Speichen befestigt und insbesondere eingeschraubt wird.

Insbesondere bei einer Hinterradnabe werden auf der Seite des Rotors viele Komponenten vorgesehen, die für eine zuverlässige Funktion der Nabe wichtig sind. Beispielsweise wird dort der Freilauf in Form beispielsweise eines Zahnscheibenfreilaufs vorgesehen. Die Dichtung zwischen dem Rotor und dem Nabengehäuse baut in einem konventionellen Falle axial nach außen aus. Sollen nun Straight-Pull-Speichen eingesetzt werden, so müssen die Speichen radial von innen in die Speichenlöcher nach außen geschoben werden. Dabei kann bei konventionellen Naben die Dichtung stören. Das kann bei konventionellen Naben dazu führen, dass der Außendurchmesser des Speichenflansches vergrößert werden muss, damit die Straight-Pull-Speichen nicht bei dem linearen Einschieben mit dem Dichtungssitz kollidieren. Dieses Problem nimmt mit der Anzahl der Speichen und mit einem steiler werdenden Speichenwinkel zu.

Weiter axial nach außen können die Speichen aber nicht angeordnet werden, da dort der Rotor mit dem Ritzelpaket angeordnet ist.

Hier erlaubt es die Erfindung, eine solche Nabe einfacher zu konstruieren und einfacher zu montieren. Bei der Montage der Speichen ist keine störende Dichtung vorhanden, da die Dichtung zusammen mit dem Dichtungsdeckel abgenommen wird. Erst nach der Montage und dem Einschieben der Speichen wird der Dichtungsdeckel aufgesetzt und somit die Dichtung in Funktionsstellung gebracht.

Das ermöglicht es bei einer solchen Nabe, den Außendurchmesser der Speichenaufnahme oder des Nabenflansches zu verringern und gleichzeitig sogar die Steilheit der Speichen zu verringern. Insbesondere auf der Rotorseite einer Hinterradnabe haben die Speichen einen sehr steilen Verlauf, der zu einer hohen Belastung der Speichen führt. Jedes zehntel Millimeter, dass die Speichenlöcher axial nach außen versetzt werden können, reduziert dabei den Winkel der Speichen und damit die auftretenden Belastungen erheblich. Außerdem wird dadurch die Seiten-Steifigkeit des Laufrades verbessert.

Weitere Vorteile und Merkmale der vorliegenden Erfindung ergeben sich aus der Beschreibung der Ausführungsbeispiele, die mit Bezug auf die beiliegenden Figuren im Folgenden erläutert werden.

In den Figuren zeigen:
- Fig. 1: eine schematische Seitenansicht eines mit erfindungsgemäßen Naben ausgerüsteten Rennrades;
- Fig. 2: eine schematische Seitenansicht eines mit erfindungsgemäßen Naben ausgerüsteten Mountain-Bikes;
- Fig. 3: einen schematischen Querschnitt durch eine erste erfindungsgemäße Nabe;
- Fig. 4: ein vergrößertes Detail aus Fig. 3;
- Fig. 5: eine Explosionsdarstellung der Nabe nach Fig. 3;
- Fig. 6: einen schematischen Querschnitt durch eine zweite erfindungsgemäße Nabe;
- Fig. 7: ein vergrößertes Detail aus Fig. 6;
- Fig. 8: eine Explosionsdarstellung der Nabe nach Fig. 6;
- Fig. 9: einen schematischen Querschnitt durch eine dritte erfindungsgemäße Nabe;
- Fig. 10: ein vergrößertes Detail aus Fig. 9; und
- Fig. 11: eine Explosionsdarstellung der Nabe nach Fig. 9.

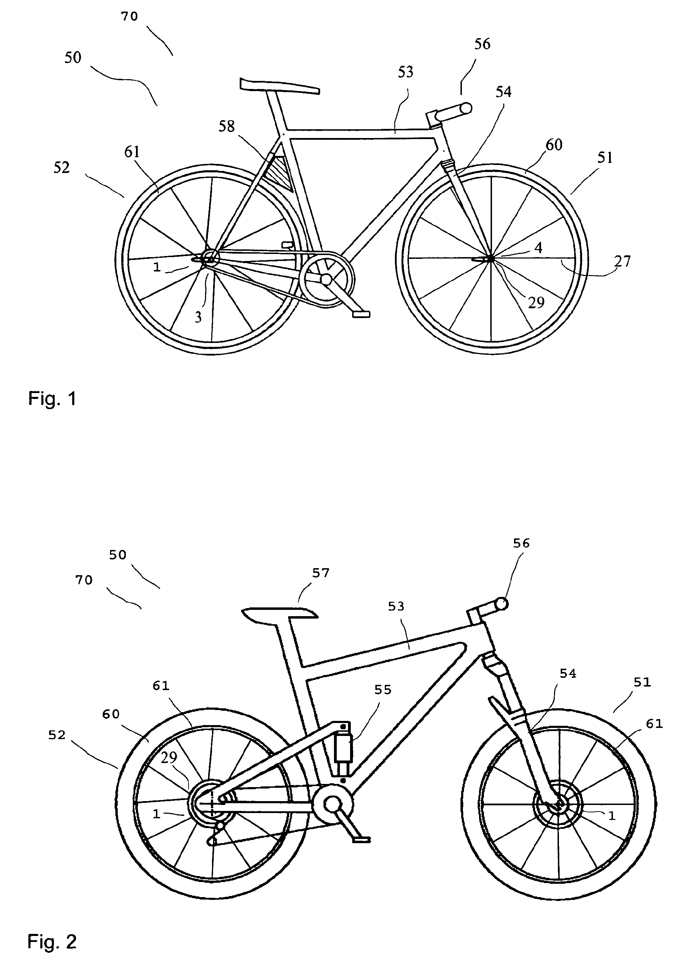

In Fig. 1 ist ein als Zweirad 50 und insbesondere als Rennrad ausgeführtes Fahrzeug 70 in einer schematischen Seitenansicht abgebildet. Das Fahrrad 50 ist wenigstens teilweise muskelbetrieben und kann über einen elektrischen Hilfsantrieb verfügen.

Das Rennrad ist in einer stark schematischen Seitenansicht abgebildet und weist ein Vorderrad 51 und ein Hinterrad 52 und einen Rahmen 53 auf. Ein Lenker 56 dient zur Steuerung und kann unterschiedlich ausgebildet sein. Neben einer Ausgestaltung als Rennlenker sind auch andere bekannte Ausgestaltungen möglich.

Unterhalb des Sattels 57 kann eine Batterie 58 vorgesehen, die insbesondere bei elektrounterstützten Zweirädern Anwendung findet. Grundsätzlich kann eine solche Batterie 58 auch an anderen Stellen am Rahmen angebracht sein oder in den Rahmen integriert oder sonst wo untergebracht sein.

Bei dem Fahrrad gemäß Fig. 1 kann der Reifen 60 als schlauchloser Reifen ausgeführt und beispielsweise auf die Felge 61 aufgeklebt sein. Bei dem Vorderrad 51 und dem Hinterrad 52 ist die Felge 61 jeweils über Speichen 27 mit der Nabe verbunden.

Das Hinterrad 52 verfügt über eine erfindungsgemäße Nabe 1 als Hinterradnabe 3, während das Vorderrad mit einer erfindungsgemäßen Nabe als Vorderradnabe 4 verfügt.

In Fig. 2 ist ein Mountain-Bike-Fahrrad 50 in einer stark schematisierten Seitenansicht abgebildet, welches über ein Vorderrad 51 und ein Hinterrad 52, einen Rahmen 53, eine gefederte Vordergabel 54 und einen Hinterraddämpfer 54 verfügt. In diesem Ausführungsbeispiel sind Scheibenbremsen vorgesehen. An dem Hinterrad 52 ist eine erfindungsgemäße Hinterradnabe 3 und an dem Vorderrad 51 ist eine erfindungsgemäße Vorderradnabe 4 vorgesehen.

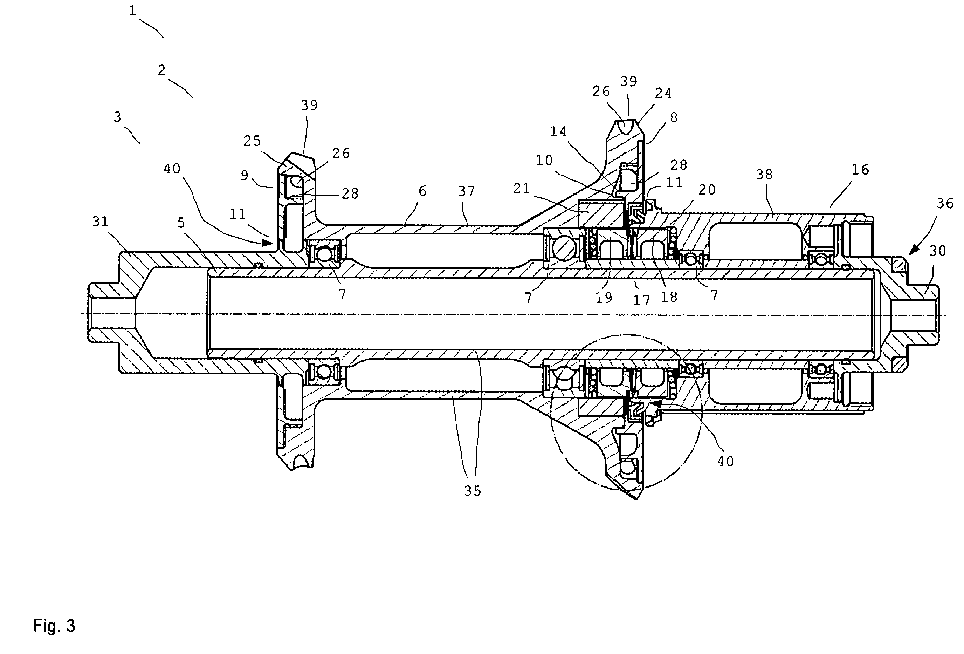

Fig. 3 zeigt einen stark schematisierten Querschnitt durch eine erfindungsgemäße Fahrradkomponente 1, welche hier als Hinterradnabe 3 ausgeführt ist. Die Hinterradnabe 3 ist für den Einsatz an dem Fahrrad gemäß Fig. 1 oder 2 geeignet.

Die Hinterradnabe 3 verfügt über eine Nabenachse 5 und ein Nabengehäuse 6, welches über mehrere Lager 7 drehbar gegenüber der Nabenachse 5 gelagert ist. An den seitlichen Enden sind Adapterringe 30 und 31 vorgesehen.

Ein Zahnscheibenfreilauf 17 mit Zahnscheiben 18 und 19 ist zwischen dem Rotor 16 und dem Nabengehäuse 6 angeordnet, um das Antriebsdrehmoment des Rotors auf das Nabengehäuse zu übertragen.

Die Zahnscheiben 18 und 19 weisen jeweils eine Axialverzahnung auf, über die die beiden Zahnscheiben 18 und 19 zur Drehmomentübertragung miteinander im Eingriff stehen.

Die Zahnscheiben 18 und 19 weisen unrunde Außenquerschnitte auf und sind jeweils drehfest und axial verschiebbar in Eingriffskomponenten 20 bzw. 21 aufgenommen. Die Eingriffskomponente 20 wird durch den Rotor 16 gebildet, während die Eingriffskomponente 21 als separates Teil in dem Nabengehäuse 6 vorgesehen ist.

Die Zahnscheiben 18 und 19 weisen hier im Ausführungsbeispiel Außenverzahnungen auf, mit denen sie im Rotor 16 bzw. in der Eingriffskomponente 21 drehfest aber axial verschiebbar aufgenommen sind.

Das Nabengehäuse 6 weist Nabenflansche 24 und 25 auf, an denen Speichenöffnungen in Form von Speichenlöchern 26 vorgesehen sind.

Auf der Rotorseite ist der Nabenflansch 24 vorgesehen, während an der anderen Seite der Nabenflansch 25 angeordnet ist.

Hier im Ausführungsbeispiel ist die als Hinterradnabe 3 ausgeführte Nabe 2 für den Einsatz von Straight-Pull-Speichen 27 vorgesehen. Solche Speichen sind langgestreckt und werden linear durch die Speichenlöcher 26 geführt, bis sie beispielsweise mit ihrem Speichenkopf in dem Aufnahmeraum 28 an den Nabenflanschen 24 bzw. 25 aufgenommen sind.

In dem Aufnahmeraum 28 werden die Speichen 27 durch die Dichtungsdeckel 8 bzw. 9 verliersicher aufgenommen. Die Dichtungsdeckel 8 und 9 sind in die Speichenflansche 24 und 25 eingeschraubt. Dadurch halten die Dichtungsdeckel 8 und 9 die Speichen 27 verliersicher an der Nabe, sodass die weitere Montage des Rades einfacher ist.

An den Dichtungsdeckeln 8 und 9 sind jeweils Dichteinheiten 11 vorgesehen, um das Nabengehäuse 6 nach außen abzudichten. An dem Nabenflansch 9 wirkt die Dichteinheit 11 mit dem Adapterring 31 zusammen, um das Innere des Nabengehäuses 6 und insbesondere die Lager 7 vor Umwelteinflüssen zu schützen.

Der Dichtungsdeckel 8 auf der Seite des Rotors 16 ist in den Nabenflansch 24 eingeschraubt und verfügt ebenfalls über eine Dichteinheit 11. Hier wirkt die Dichteinheit 11 des Dichtungsdeckels 8 mit dem Rotor zusammen, sodass sowohl eine Labyrinthdichtung als auch eine berührende Elastomerdichtung zwischen dem Nabengehäuse 6 und dem Rotor 16 vorliegt. Dadurch wird das Innere des Nabengehäuses 6 und insbesondere auch der Zahnscheibenfreilauf 17 vor Umwelteinflüssen geschützt.

Insgesamt zeigt Fig. 3 eine als Nabe 2 und hier als Hinterradnabe 3 ausgebildete Fahrradkomponente 1 mit mehreren Einheiten 35 bis 38. Dabei ist die Einheit 36 als feststehende Einheit 35 ausgebildet, die hier aus den Adaptern 30 und 31 und der Nabenachse 5 besteht. Möglich ist es auch, dass die feststehende Einheit 35 nur aus der Nabenachse 5 besteht.

Das Nabengehäuse 6 bildet eine rotierbare Einheit 37, die über Lager 7 auf der Nabenachse 5 rotierbar gelagert ist. Das Nabengehäuse 6 weist hier Nabenflansche 24, 25 als Speichenaufnahmen 39 zur Befestigung der Speichen 27 auf.

Hier sind zwei separate und an rotierbaren Einheiten 38 befestigte Dichtungsdeckel 8 und 9 vorgesehen. Der Dichtungsdeckel 8 ist hier an der drehbaren Einheit 37 befestigt, könnte aber auch an der drehbare Einheit 38 befestigt werden. Der Dichtungsdeckel 8 weist eine Durchgangsöffnung 40 auf, durch welche der Rotor 16 als rotierbare Einheit 38 und die feststehende Nabenachse als feststehende Einheit 36 durchgeführt sind.

Der Dichtungsdeckel 8 dichtet hier das Innere der Nabe 2 gegenüber dem Rotor 16 als Einheit 38 ab. Der Rotor 16 ist gegenüber dem Nabengehäuse 6 drehbar angeordnet bzw. das Nabengehäuse 6 kann in Freilaufrichtung frei gegenüber dem Rotor 16 gedreht werden.

Der Dichtungsdeckel 9 ist ebenfalls an dem Nabengehäuse als drehbarer Einheit 37 befestigt, könnte aber auch an dem Adapter 31 und somit an der feststehenden Einheit 36 befestigt werden.

Grundsätzlich kann in allen Ausgestaltungen wenigstens ein separater und an einer feststehenden oder rotierbaren Einheit befestigter Dichtungsdeckel vorgesehen sein, an dem eine wenigstens teilweise abgedichtete Durchgangsöffnung vorgesehen ist. Durch die Durchgangsöffnung ist wenigstens eine relativ zu dem Nabengehäuse drehbare feststehende und/oder rotierbare Einheit durchgeführt.

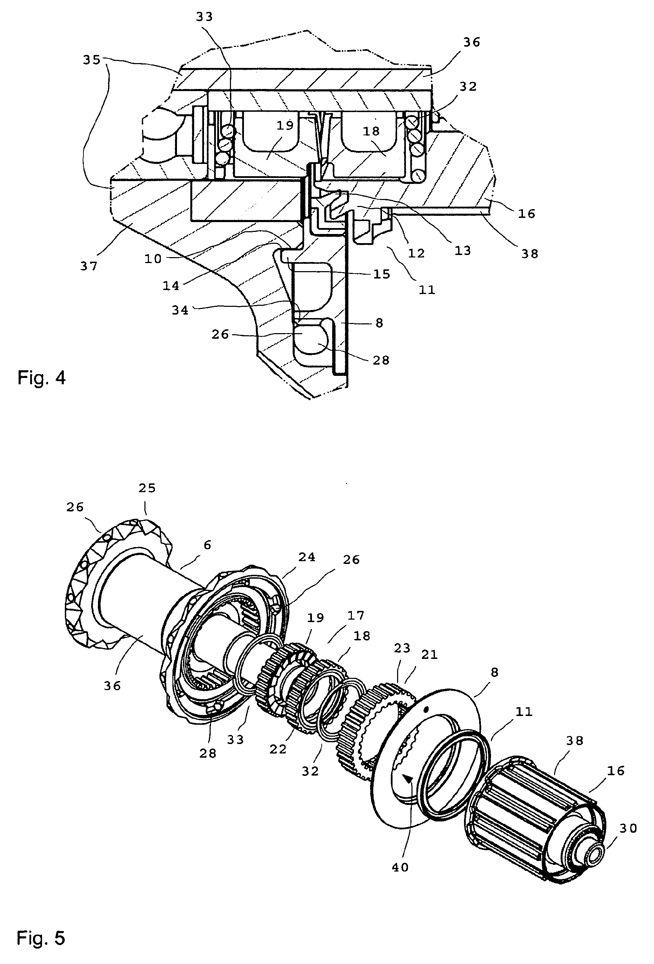

Fig. 4 zeigt einen vergrößerten Ausschnitt des strichpunktierten Details aus Fig. 3, wobei die Konstruktion und Anordnung des Dichtungsdeckels an dem Nabengehäuse 6 noch deutlicher wird.

Der Zahnscheibenfreilauf 17 verfügt über Federn 32 und 33, die axial von außen auf die Zahnscheiben 18 bzw. 19 drücken, um die Zahnscheiben gegeneinander vorzubelasten.

Die Dichteinheit 11 umfasst hier Dichteinheiten 12 und 13, die die berührungslose Labyrinthdichtung und die berührende Elastomerdichtung 13 realisieren.

Der Dichtungsdeckel 8 wird über das Gewinde 34 in das Nabengehäuse 6 eingeschraubt. Zentriert wird der Dichtungsdeckel 8 über das Führungsmittel 14 in Form eines Absatzes 10 in dem Nabengehäuse und das Führungsmittel 15 in Form eines zylindrischen Rohrstückes an dem Dichtungsdeckel 8.

Insbesondere die Darstellung gemäß Fig. 4 zeigt, dass nach der Abnahme des Rotors und des Dichtungsdeckels 8 bzw. vor der Montage des Dichtungsdeckels 8 und des Rotors 16 die Speichen 27 auf einfache Art und Weise durch die Speichenlöcher 26 eingeführt werden können, da viel Platz zur Verfügung steht. Nach dem Einführen der Speichen 27 in die Aufnahmeräume 28 wird der Dichtungsdeckel 8 aufgeschraubt, sodass die Nabe 3 mit den etwa sternförmig abstehenden Speichen bestückt ist. Anschließend wird der Rotor 16 aufgebracht. Für eine Zentrierung des Dichtungsdeckels 8 sorgen die Führungsmittel 14 und 15. Der Rotor wird über die Lager 7 zentriert, sodass eine genau definierte Positionierung des Rotors zu dem Dichtungsdeckel 8 und dem Nabengehäuse 6 erfolgt.

Fig. 5 zeigt in einer Explosionsdarstellung nochmals die Hinterradnabe 3, wobei die Ausnehmungen an den Aufnahmeräumen 28 des Nabenflansches 24 gut erkennbar sind. Grundsätzlich ist es auch möglich, den Aufnahmeraum 28 als umlaufenden Aufnahmeraum auszubilden.

In Fig. 5 ist weiterhin zu erkennen, dass die Eingriffskomponente 21 über eine unrunde Außenkontur 23 verfügt, damit die Eingriffskomponente 21 verdrehsicher in dem Nabengehäuse 6 aufgenommen wird, die über eine entsprechende unrunde Kontur verfügt.

Analog dazu sind die Zahnscheiben 18 und 19 mit entsprechenden Außenverzahnungen 22 oder unrunden Konturen versehen, die in eine entsprechende Innenkontur der Eingriffskomponenten 20 und 21 eingreifen, sodass die Zahnscheiben 18 und 19 drehfest aber axial verschiebbar in den Eingriffskomponenten 20 und 21 aufgenommen sind.

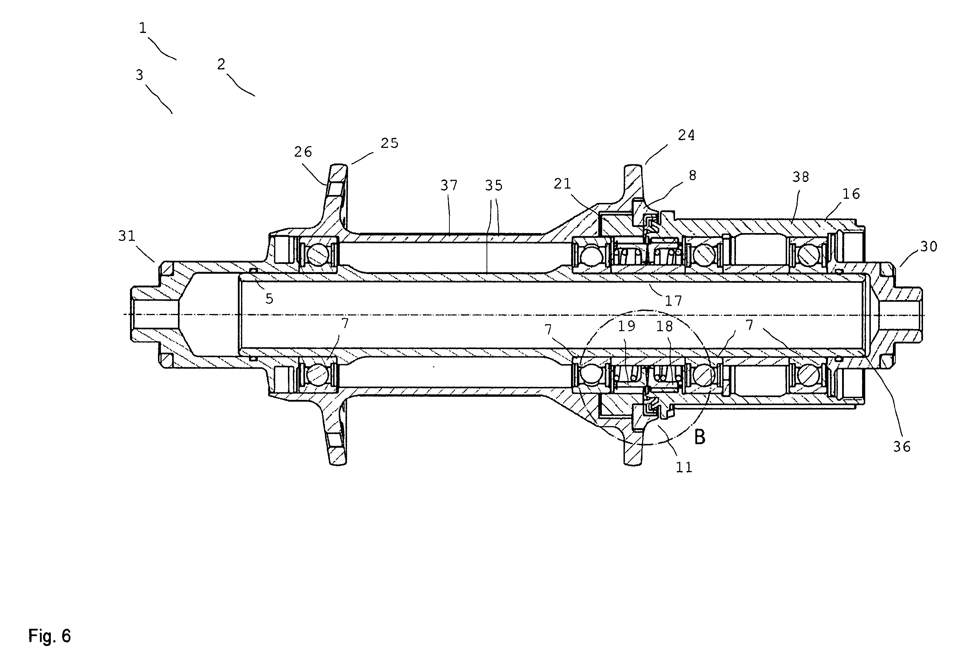

Mit Bezug auf die Fig. 6 bis 8 wird ein zweites Ausführungsbeispiel einer erfindungsgemäßen Fahrradkomponente 1 erläutert, welche hier ebenfalls als Hinterradnabe 3 ausgeführt ist.

Die Hinterradnabe 3 verfügt über eine Nabenachse 5 und ein Nabengehäuse 6, welches mit Nabenflanschen 24 und 25 versehen ist. In den Nabenflanschen sind hier etwa axial angeordnete Speichenlöcher 26 zur Aufnahme konventioneller Speichen vorgesehen.

Das Nabengehäuse 6 ist gegenüber der Nabenachse 5 über mehrere Lager 7 drehbar gelagert. An den axialen Enden sind Adapter 30 und 31 aufgeschoben, die über in Nuten aufgenommenen O-Ringen an der Nabenachse 5 gesichert sind. Mit den Adapterringen 30 und 31 wird die Nabe 2 an den Ausfallenden eines Fahrrads befestigt.

Die Hinterradnabe 3 verfügt über einen Zahnscheibenfreilauf 17 mit Zahnscheiben 18 und 19, die über Federn 32 und 33 in axialer Richtung aufeinander zu vorbelastet sind.

Auf der Seite des Rotors 16, der zur Aufnahme eines Ritzelpaketes mit mehreren Ritzeln dient, ist ein Dichtungsdeckel 8 vorgesehen, der über eine Dichteinheit 11 verfügt.

Der Dichtungsdeckel 8 ist über ein Gewinde 34 in das Nabengehäuse 6 eingeschraubt und sichert so die axiale Position der Eingriffskomponente 21, an der die Zahnscheibe 19 drehfest und axial beweglich aufgenommen ist.

Auch die in Fig. 4 abgebildete Nabe 2 ist als Hinterradnabe 3 ausgebildet und umfasst mehrere Einheiten 35 bis 38. Die Einheit 36 ist als feststehende Einheit 35 ausgebildet, die hier aus den Adaptern 30 und 31 und der Nabenachse 5 besteht.

Das Nabengehäuse 6 bildet eine rotierbare Einheit 37, die über Lager 7 auf der Nabenachse 5 rotierbar gelagert ist.

Es sind wieder zwei separate und an dem Nabengehäuse 6 befestigte Dichtungsdeckel 8 und 9 vorgesehen ist. Der Dichtungsdeckel 8 weist eine Durchgangsöffnung 40 für den Rotor 16 als rotierbare Einheit 38 auf. Der Dichtungsdeckel 8 umfasst eine Durchgangsöffnung 40 für die feststehende Nabenachse als feststehende Einheit 36.

Der Dichtungsdeckel 8 dichtet das Innere der Nabe 2 gegenüber dem Rotor 16 als Einheit 38 ab. Der Rotor 16 ist gegenüber dem Nabengehäuse 6 drehbar angeordnet bzw. das Nabengehäuse 6 kann in Freilaufrichtung frei gegenüber dem Rotor 16 gedreht werden.

Fig. 7 zeigt das vergrößerte Detail aus Fig. 6. Der in das Nabengehäuse 6 mit dem Gewinde 34 eingeschraubte Dichtungsdeckel 8 trägt Dichteinheiten 11, die hier im Zusammenspiel mit dem Rotor 16 eine berührungsfreie Labyrinthdichtung 12 und eine berührende Elastomerdichtung 13 bilden. Dadurch ist das Innere des Nabengehäuses 6 und insbesondere der Zahnscheibenfreilauf 17 vor Umwelteinflüssen geschützt. Über einen Absatz 10 wird eine Zentrierung des Dichtungsdeckels 8 bewirkt. Die Eingriffskomponente 21 wird wiederum über das Lager 7 zentriert an der Nabe 2 aufgenommen.

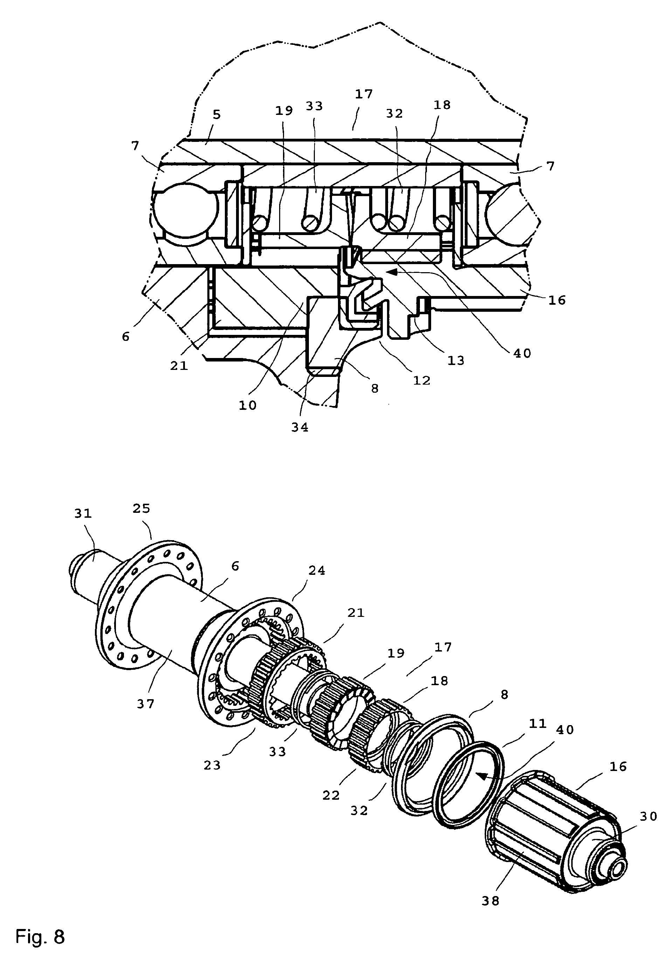

Fig. 8 zeigt in einer Explosionsdarstellung die Hinterradnabe 3 gem. Fig. 6, wobei wiederum die unrunde Außenkontur 23 der Eingriffskomponente 21 erkennbar ist.

Die Dichteinheit 11 kann als separates Teil an dem Dichtungsdeckel 8 befestigt sein, sodass die Dichteinheit 11 bei Bedarf austauschbar ist.

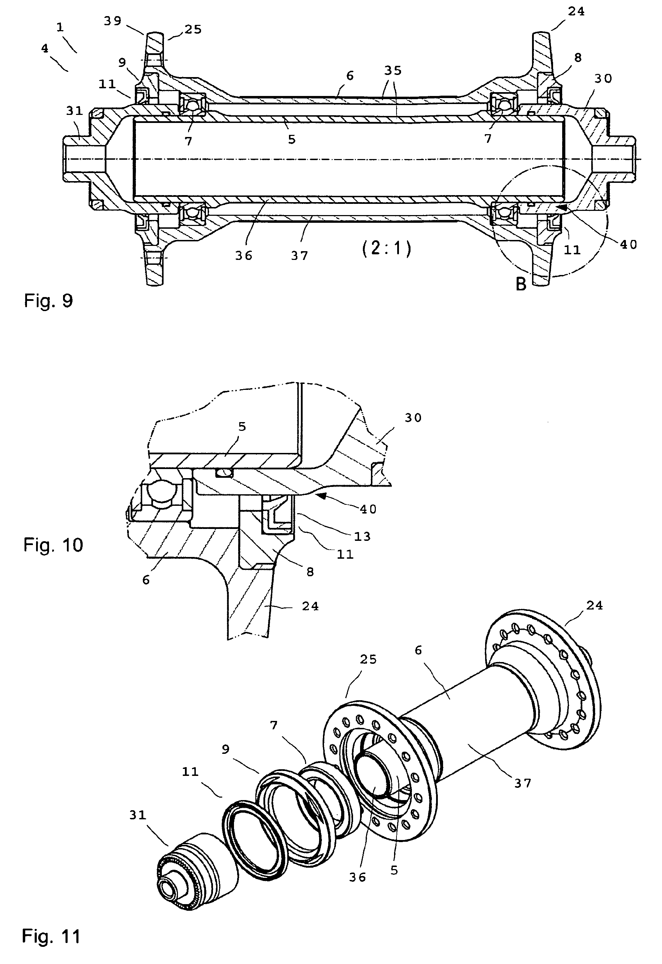

Mit Bezug auf die Fig. 9 bis 11 wird ein weiteres Ausführungsbeispiel einer erfindungsgemäßen Fahrradkomponente 1 ausgeführt, welche hier als Vorderradnabe 4 ausgebildet ist.

Die Vorderradnabe 4 nach Fig. 9 verfügt über eine Nabenachse 5 und ein Nabengehäuse 6, welches über Lager 7 drehbar gegenüber der Nabenachse 5 gelagert ist. An den axialen Enden sind Adapterringe 30 und 31 vorgesehen, die mit ihren äußeren Ende in die Ausfallenden einer Fahrradgabel oder eines Fahrradrahmens eingeschoben werden.

Die Vorradnabe 4 ist hier mit Speichenflanschen 24 und 25 versehen, an der hier konventionelle Speichen befestigt werden. Möglich ist es aber auch, Straight-Pull-Speichen zu befestigen, wenn entsprechend anders gestaltete Nabenflansche 24 und 25 eingesetzt werden. An beiden Enden des Nabengehäuses 6 sind hier Dichtungsdeckel 8 und 9 vorgesehen, die jeweils über eine Dichteinheit 11 verfügen. Es ist möglich, dass die Dichteinheiten als Labyrinthdichtungen 12 oder als Elastomerdichtungen 13 ausgeführt sind und in Zusammenwirkung mit der Nabenachse eine entsprechende Dichtfunktion zur Verfügung stellen.

Fig. 10 zeigt das vergrößerte Detail aus Fig. 9. Auch hier wird der Dichtungsdeckel 8 in das Nabengehäuse 6 eingeschraubt. Möglich ist es aber auch, den Dichtungsdeckel 8 über einen in einer äußeren Umfangsnut angeordneten O-Ring im Nabengehäuse 6 klemmend zu befestigen. Dann wird der Dichtungsdeckel 8 so ähnlich in dem Nabengehäuse 6 gehalten, wie die Adapterringe 30 bzw. 31 klemmend auf der Nabenachse 5 gehalten werden.

Fig. 11 zeigt eine Explosionsdarstellung der Vorderradnabe 4 aus Fig. 9, wobei auch hier die Dichteinheit 11 austauschbar an den Dichtungsdeckel 9 vorgesehen ist.

Die mit Bezug auf die Fig. 9 bis 11 erläuterte Nabe 2 ist als Vorderradnabe 4 ausgebildet und umfasst mehrere Einheiten 35 bis 37. Die Einheit 36 als Nabenachse 5 ist als feststehende Einheit 35 ausgebildet. Das Nabengehäuse 6 bildet eine rotierbare Einheit 37, die über Lager 7 auf der Nabenachse 5 rotierbar gelagert ist.

Die an dem Nabengehäuse 6 befestigten Dichtungsdeckel 8 und 9 dichten die Durchgangsöffnung 40 jeweils nach innen hin ab. Durch die Durchgangsöffnung 40 ist hier die Nabenachse 5 durchgeführt. Die Nabenachse 5 ist relativ zu dem Nabengehäuse 6 drehbar angeordnet.

Insgesamt wird eine einfach aufgebaute Fahrradkomponente zur Verfügung gestellt, die eine sichere Funktionalität erlaubt und einfach zu montieren ist. Dabei ist sowohl der Einsatz einer konventionellen Bespeichung möglich als auch der Einsatz von Straight-Pull-Speichen.

### Bezugszeichenliste:

- 1: Fahrradkomponente
- 2: Nabe
- 3: Hinterradnabe
- 4: Vorderradnabe
- 5: Nabenachse
- 6: Nabengehäuse
- 7: Lager
- 8: Dichtungsdeckel
- 9: Dichtungsdeckel
- 10: Absatz
- 11: Dichteinheit
- 12: Labyrinthdichtung
- 13: Elastomerdichtung
- 14: Führungsmittel
- 15: Führungsmittel
- 16: Rotor
- 17: Zahnscheibenfreilauf
- 18: Zahnscheibe
- 19: Zahnscheibe
- 20: Eingriffskomponente
- 21: Eingriffskomponente
- 22: Außenverzahnung der Zahnscheibe
- 23: unrunde Außenkontur
- 24: Nabenflansch Rotorseite
- 25: Nabenflansch
- 26: Speichenloch
- 27: Speiche
- 28: Aufnahmeraum
- 29: inneres Speichenende
- 30: Adapterring
- 31: Adapterring
- 32: Feder
- 33: Feder
- 34: Gewinde
- 35: Einheit
- 36: feststehende Einheit
- 37: drehbare Einheit
- 38: drehbare Einheit
- 39: Speichenaufnahme
- 40: Durchgangsöffnung
- 50: Fahrrad
- 51: Vorderrad
- 52: Hinterrad
- 53: Rahmen
- 54: Gabel
- 55: Hinterraddämpfer
- 56: Lenker
- 57: Sattel
- 58: Batterie
- 60: Reifen
- 61: Felge
- 70: Fahrzeug

## Patentansprüche

1. Fahrradkomponente (1-4) für wenigstens teilweise muskelbetriebene Fahrzeuge (70) und insbesondere Zweiräder (50) mit mehreren Einheiten (35-38), von denen wenigstens eine Einheit (36) als feststehende Einheit (36) und wenigstens eine Einheit (37, 38) als rotierbare Einheit (37, 38) ausgebildet ist,
wobei eine feststehende Einheit (36) wenigstens einen Teil einer Nabenachse (5) bildet,
und wobei eine rotierbare Einheit (37) als ein Nabengehäuse (6) ausgebildet ist,
wobei das Nabengehäuse (6) mit wenigstens einer Speichenaufnahme (39) zur Befestigung von wenigstens einer Speiche (27) versehen ist und über wenigstens ein Lager (7) drehbar gegenüber der Nabenachse (5) gelagert ist,
**dadurch gekennzeichnet,**
**dass** wenigstens ein separater und an wenigstens einer der mehreren Einheiten (35-38) befestigter Dichtungsdeckel (8, 9) vorgesehen ist,
an dem eine wenigstens teilweise abgedichtete Durchgangsöffnung (40) für wenigstens eine Einheit (36, 38) vorgesehen ist, welche Einheit (36, 38) relativ zu dem Nabengehäuse (6) drehbar ist.

2. Fahrradkomponente (1) nach Anspruch 1, wobei an wenigstens einem Dichtungsdeckel (8, 9) wenigstens eine Dichteinheit (11) vorgesehen ist, wobei insbesondere wenigstens eine Labyrinthdichtung (12) als Dichteinheit (11) und/oder wenigstens eine Elastomerdichtung (13) als Dichteinheit (11) vorgesehen ist.

3. Fahrradkomponente (1) nach wenigstens einem der vorhergehenden Ansprüche, wobei wenigstens ein Dichtungsdeckel (8, 9) mit dem Nabengehäuse (6) verschraubt ist.

4. Fahrradkomponente (1) nach wenigstens einem der vorhergehenden Ansprüche, wobei in dem Nabengehäuse (6) wenigstens ein Führungsmittel (14) vorgesehen ist, welches mit wenigstens einem Führungsmittel (15) an dem Dichtungsdeckel (8, 9) zusammenwirkt, um eine definierte Aufnahme des Dichtungsdeckel (8, 9) an dem Nabengehäuse (6) zu gewährleisten.

5. Fahrradkomponente (1) nach wenigstens einem der vorhergehenden Ansprüche, wobei ein Rotor (16) vorgesehen ist.

6. Fahrradkomponente (1) nach wenigstens einem der vorhergehenden Ansprüche, wobei ein Zahnscheibenfreilauf (17) mit wenigstens einer Zahnscheibe (18, 19) vorgesehen ist und wobei die Zahnscheibe (18, 19) drehfest und axial verschiebbar in einer Eingriffskomponente (20, 21) aufgenommen ist.

7. Fahrradkomponente (1) nach wenigstens einem der vorhergehenden Ansprüche, wobei die Eingriffskomponente (20, 21) in das Nabengehäuse (6) eingeschraubt ist.

8. Fahrradkomponente (1) nach Anspruch 7, wobei die Eingriffskomponente (20, 21) eine unrunde Außenkontur (23) aufweist und in eine unrunde Innenkontur des Nabengehäuses (6) eingeschoben ist, sodass die Eingriffskomponente (20, 21) drehfest in dem Nabengehäuse (6) aufgenommen ist.

9. Fahrradkomponente (1) nach wenigstens einem der vorhergehenden Ansprüche, wobei die Eingriffskomponente (20, 21) in axialer Richtung durch den Dichtungsdeckel (8, 9) gesichert wird.

10. Fahrradkomponente (1) nach wenigstens einem der vorhergehenden Ansprüche, wobei die Speichenaufnahme (39) nach außen verlaufende Speichenlöcher (26) für Speichen (27) aufweist.

11. Fahrradkomponente (1) nach wenigstens einem der vorhergehenden Ansprüche, wobei an der Speichenaufnahme (39) wenigstens ein Aufnahmeraum (28) für wenigstens ein inneres Speichenende (29) vorgesehen ist, wobei der Aufnahmeraum (28) durch den Dichtungsdeckel (8, 9) abgedeckt wird.

12. Fahrradkomponente (1) nach dem vorhergehenden Anspruch, wobei wenigstens eine Speiche (27) mit dem inneren Speichenende (29) in dem Aufnahmeraum (28) aufgenommen und verdrehsicher durch den Dichtungsdeckel (8, 9) gehalten wird.

13. Fahrradkomponente (1) nach wenigstens einem der vorhergehenden Ansprüche, wobei an wenigstens einem Ende der Nabenachse (5) ein Adapterring (30, 31) angeordnet ist und wobei der Dichtungsdeckel (8, 9) an dem Adapterring oder dem Nabengehäuse (6) befestigt ist.

14. Verfahren zur Montage einer Fahrradkomponente (1), wobei Speichen (27) in Speichenöffnungen (26) des Nabengehäuses (6) eingeführt werden, sodass die radial inneren Speichenenden (29) der Speichen (27) in einem Aufnahmeraum (28) an dem Nabengehäuse (6) angeordnet sind, wobei anschließend ein Dichtungsdeckel (8, 9) an dem Nabengehäuse (6) befestigt wird, sodass die Speichen (27) verliersicher an der Nabe (2) aufgenommen sind.

15. Verfahren nach dem vorhergehenden Anspruch, wobei anschließend der Rotor (16) angeordnet wird.
